# EUROPÄISCHE PATENTANMELDUNG

(11) **EP 2 763 088 A1**
(43) Veröffentlichungstag der Anmeldung: **06.08.2014**
(21) Anmeldenummer: 14151396.0
(22) Anmeldetag: 16.01.2014
(51) Int. Cl.: G06Q 10/08

(54) **Teilelager für Ersatzteile**

(30) Priorität: 30.01.2013 DE 102013100958; 31.01.2013 DE 102013101002
(71) Anmelder: Trailcon Oy, 02330 Espoo (FI)
(72) Erfinder: Danielsson, Henrik, 00550 Helsinki (FI); Laine, Topi, 00640 Helsinki (FI); Hirvonen, Markku, 02760 Espoo (FI); Kraatz, Hans-Peter, 02210 Espoo (FI)
(74) Vertreter: Christophersen & Partner

(57) **Zusammenfassung**

Mit dem Ziel einer logistisch vereinfachten Lagerung sowie einer verbesserten Verfügbarkeit von Ersatzteilen von zu wartenden bzw. zu reparierenden Fahrzeugen wird ein Teilelager für Ersatzteile von zu wartenden bzw. zu reparierenden Fahrzeugen vorgeschlagen, mit einem Raum (1), innerhalb dessen angeordnet sind:
eine aus Regalen (8) mit übereinander und nebeneinander angeordneten Lagerflächen (10) bestehende Lagerzone (6) für Ersatzteile (E), die jeweils mit einem berührungslos erfassbaren Identifizierungselement versehen sind;
eine Datenerfassungszone (12) mit einer Außentür (14);
eine datentechnisch mit einem Warenwirtschaftssystem verknüpfte Identifizierungsvorrichtung (21, 22) zum berührungslosen Erfassen von Ersatzteilen (E) in der Datenerfassungszone (12);
wobei der Raum (1) nur über die Datenerfassungszone (12) verlassbar ist.

## Beschreibung

Die Erfindung betrifft ein Teilelager für Ersatzteile von zu wartenden bzw. zu reparierenden Fahrzeugen, insbesondere Schwerlast-Anhängerfahrzeugen.

In Betrieben, die mit der Wartung und der Reparatur von Nutzfahrzeugen und insbesondere Schwerlast-Anhängerfahrzeugen befasst sind, besteht regelmäßig Bedarf an Ersatzteilen und Austauschteilen, wozu der Betrieb ein entsprechend großes Teilelager zumindest für die häufig oder regelmäßig benötigten Ersatzteile unterhalten muss. Derartige Teilelager erfordern hinsichtlich Bestückung und Entnahme von Ersatzteilen einen erheblichen warenlogistischen Aufwand. Dieser ist noch größer, wenn Ersatzteilsortimente verschiedener Hersteller und Anbieter vorrätig gehalten werden müssen. Denn häufig hat jeder Hersteller oder Teilehändler sein eigenes Warenwirtschaftssystem, welches der Reparatur- und Servicebetrieb daher zunächst mit seinem eigenen Warenwirtschaftssystem abgleichen muss.

Werden Ersatzteile eines bestimmten Herstellers oder Teilehändlers besonders häufig benötigt, kann sich ein Ersatzteillager ausschließlich für Ersatz- und Austauschteile dieses Unternehmens lohnen. Die Neubestückung mit Ersatzteilen ebenso wie die Entnahme benötigter Ersatzteile kann dann im Rahmen eines begrenzten Warenwirtschaftssystems erfolgen, wodurch sich für den betreffenden Betrieb der logistische Aufwand reduziert.

Ziel der Erfindung ist eine logistisch vereinfachte Lagerung sowie eine verbesserte Verfügbarkeit von Ersatzteilen von zu wartenden bzw. zu reparierenden Fahrzeugen, insbesondere Schwerlast-Anhängerfahrzeugen.

Zur **Lösung** dieser Aufgabe vorgeschlagen wird ein Teilelager für Ersatzteile von zu wartenden bzw. zu reparierenden Fahrzeugen mit den Merkmalen des Patentanspruchs 1.

Das erfindungsgemäße Teilelager ist besonders geeignet für solche Reparatur- und Servicebetriebe für Nutzfahrzeuge, in denen Ersatzteile bestimmter Hersteller besonders häufig nachgefragt sind. Dies ist vor allem in Reparatur- und Servicebetrieben für Schwerlast-Anhängerfahrzeuge der Fall. Die Neubestückung mit Ersatzteilen ebenso wie die Entnahme benötigter Ersatzteile kann dann im Rahmen eines begrenzten Warenwirtschaftssystems erfolgen, wodurch sich für den betreffenden Reparatur- und Servicebetrieb der mit der Ersatzteilbevorratung verbundene, warenlogistische Aufwand reduziert.

Der Raum des Teilelagers kann beispielsweise mobil als ein kastenförmiger Container auf einem Containerauflieger, oder stationär auf dem Hof eines Kunden oder auch innerhalb eines Gebäudes angeordnet sein, z. B. als Gebäude in einem Gebäude.

Bei dem erfindungsgemäßen Teilelager sind in einem nach außen hin abgeschlossenen Raum wie z. B. in einem kastenförmigen Container eine Lagerzone und eine Datenerfassungszone angeordnet. Die begehbare Lagerzone bildet einen ersten Teilraum und besteht aus Regalen mit übereinander und nebeneinander angeordneten Lagerflächen für Ersatzteile. Jedes dort abgelegte Ersatzteil ist mit einem berührungslos erfassbaren Identifizierungselement versehen. Bei einem bevorzugten Ausführungsbeispiel des Teilelagers ist die Datenerfassungszone, welche den zweiten Teilraum darstellt, vergleichbar einem Vorraum zu der Lagerzone. D. h. die Datenerfassungszone kann über eine Außentür betreten und verlassen werden, wohingegen die Lagerzone nur durch die Datenerfassungszone hindurch betretbar und zu verlassen ist. Bei einem weniger bevorzugten Ausführungsbeispiel des Teilelagers kann die Lagerzone auch direkt, beispielsweise durch eine weitere Außentür, betreten, jedoch wiederum nur über die Datenerfassungszone verlassen werden.

In der Datenerfassungszone befindet sich eine mit dem Warenwirtschaftssystem des Teilelagers datentechnisch verknüpfte Identifizierungsvorrichtung zum berührungslosen Erfassen der Ersatzteile in der Datenerfassungszone.

Eine bevorzugte Ausgestaltung des Teilelagers ist gekennzeichnet durch eine Innentür zwischen den beiden Teilräumen, d. h. zwischen der Datenerfassungszone und der Lagerzone. Die Innentür, welche Bestandteil einer Trennwand zwischen Datenerfassungszone und Lagerzone sein kann, ermöglicht einen exakten räumlichen Abschluss der Datenerfassungszone, was von Vorteil für die in der Datenerfassungszone angeordnete Sensorik ist.

Hinsichtlich der Identifizierungsvorrichtung werden zwei Alternativen vorgeschlagen. Bei der ersten Alternative ist die Identifizierungsvorrichtung für das Erfassen einzelner Ersatzteile ausgebildet. Bei der zweiten Alternative ist die Identifizierungsvorrichtung für ein gemeinsames Erfassen aller Ersatzteile ausgebildet, die sich innerhalb der Datenerfassungszone befinden.

Mit einer weiteren Ausgestaltung wird eine Überwachungssensorik für den Schließ- und/oder Öffnungszustand der Innentür vorgeschlagen, wobei die Identifizierungsvorrichtung dazu ausgebildet ist, das gemeinsame Erfassen aller innerhalb der Datenerfassungszone sich befindenden Ersatzteile nur bei Vorliegen eines Schließsignals der Innentür durchzuführen.

Eine weitere Ausgestaltung sieht eine in der Datenerfassungszone angeordnete, mit dem Warenwirtschaftssystem datentechnisch verknüpfte Dateneingabe- und Anzeigeeinheit vor.

Um nur autorisierten Personen das Betreten des Teilelagers zu ermöglichen, kann die Außentür mit einer elektrisch betätigbaren Türsperre versehen sein. In diesem Fall sind im Bereich außerhalb der Außentür Personenerfassungsmittel angeordnet, die signaltechnisch mit der Türsperre verbunden sind. Die Türsperre ist dazu ausgebildet, in Abhängigkeit von einem Anwesenheitssignal bzw. einem Identifizierungssignal des Personenerfassungsmittels die Außentür entweder zu blockieren oder für den Durchtritt der betreffenden Person freizugeben. Beispielsweise kann eine elektromagnetische Türverriegelung über einen Kartenleser und eine programmierte persönliche Chip-Karte entriegelt werden, die die autorisierte Person mit sich führt.

Weitere Vorteile und Einzelheiten der Erfindung werden nachfolgend anhand der Zeichnungen erläutert. Darin zeigen:
Fig. 1 in einem Längsschnitt ein als mobiler Container ausgebildetes Teilelager und
Fig. 2 eine geschnittene Draufsicht auf das Teilelager.

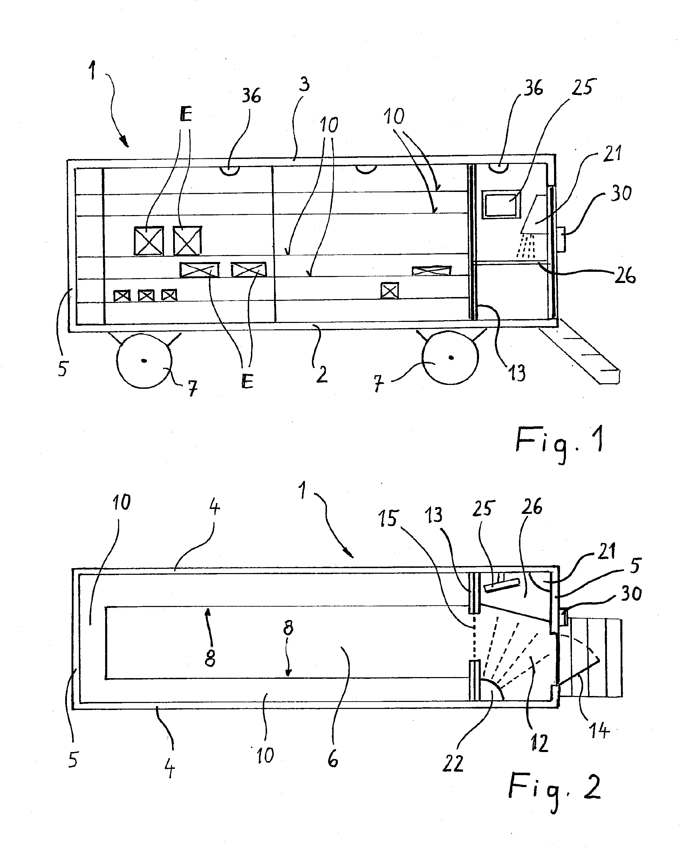

Die Figuren 1 und 2 zeigen ein Ausführungsbeispiel für ein mobiles Teilelager. Zur Aufnahme des Teilelagers dient ein quaderförmiger Container 1, der z. B. die Maße eines üblichen Frachtcontainers haben kann, was den Transport von einem Einsatzort zu einem anderen erheblich vereinfacht. In üblicher Weise setzt sich der Container 1 aus einem Boden 2, einem Dach 3, zwei Längswänden 4 und zwei Stirnwänden 5 zusammen.

Das in den Figuren 1 und 2 gezeigte Ausführungsbeispiel des Containers 1 ist zusätzlich mit einem Fahrgestell mit Rädern 7 versehen, was von Vorteil für die Mobilität des Teilelagers innerhalb z. B. eines abgeschlossenen Betriebsgeländes sein kann.

Der Raum 1 des Teilelagers ist unterteilt in zwei Teilräume, nämlich eine volumenmäßig größere Lagerzone 6 und eine volumenmäßig kleinere Datenerfassungszone 12. Zwischen den beiden Zonen 6, 12 bzw. Teilräumen befindet sich eine Trennwand 13, die durch eine Innentür 15 verschließbar ist.

In der Lagerzone 6 befinden sich Regale 8 mit übereinander und nebeneinander angeordneten Lagerflächen 10. Die einzelnen Lagerflächen 10 können unterschiedlich tief sein, zudem können auch die durch die Lagerflächen gebildeten Lagerplätze eine unterschiedliche Höhe aufweisen, um so optimale Lagerplätze je nach Größe der auf den Lagerflächen 10 abzulegenden Ersatzteile E zu haben. Wie die Draufsicht Fig. 2 auf das Innere des Teilelagers zeigt, bilden die Regale 8 in ihrer Gesamtheit einen U-förmigen Grundriss. Betreten wird die Lagerzone 6 durch die in der Trennwand 13 angeordnete Innentür 15. Eine weitere Zutrittsmöglichkeit zu der Lagerzone 6 besteht nicht. Insbesondere ist die Lagerzone 6 an ihrer in Figur 2 links wiedergegebenen Stirnwand 5 geschlossen.

Die in der Lagerzone 6 vorrätig gehaltenen Ersatzteile E sind ausnahmslos mit einem individuellen, berührungslos erfassbaren Identifizierungselement versehen. Dies kann z. B. ein Barcode sein oder auch ein elektromagnetisch sensierbares Identifizierungselement wie z. B. ein RFID Transponder.

Die Position einzelner Ersatzteile E innerhalb der Regale 8 kann entweder, sofern die Regalanordnung nicht zu groß ist, beliebig sein. Hingegen lässt sich das Auffinden eines gesuchten Ersatzteils E erleichtern, wenn jedes Ersatzteil seinen bestimmten Platz innerhalb der zur Verfügung stehenden Lagerflächen 10 hat. Wo genau das jeweils gesuchte Ersatzteil zu finden ist, ist vor Betreten der Lagerzone 6 anhand einer in der Datenerfassungszone 12 angebrachten Dateneingabe- und Anzeigeeinheit 25 feststellbar. Durch Eingabe z. B. einer Kennnummer des jeweiligen Ersatzteils wird der Person über die Dateneingabe- und Anzeigeeinheit 25 angezeigt, auf welchem der Regale 8 und auf welcher Lagerfläche 10 das gesuchte Ersatzteil E zu finden ist. Alternativ kann der Person eine Software an deren Arbeitsplatz zur Verfügung stehen, mit der die Teileverfügbarkeit und der Lagerort vor Betreten des Teilelagers in Erfahrung gebracht werden kann. Bei der Dateneingabe- und Anzeigeeinheit kann es sich um eine All-in-one-PL mit Touchscreen handeln.

Die Datenerfassungszone 12 ist in Verlängerung der Lagerzone 6 angeordnet, und von dieser durch die Trennwand 13 mit der Innentür 15 getrennt. Eine das Betreten des Containers 1 ermöglichende Außentür 14 führt in die Datenerfassungszone 12, so dass diese, raumtechnisch betrachtet ein Vorraum zu dem eigentlichen Lagerraum ist, also der Lagerzone 6.

In der Datenerfassungszone 12 befindet sich neben der bereits erwähnten Dateneingabe- und Anzeigeeinheit 25 mindestens eine Identifizierungsvorrichtung 21, 22. Vorzugsweise ist die Identifizierungsvorrichtung ein berührungslos arbeitender Scanner, welcher zur datentechnischen Erfassung der an den einzelnen Ersatzteilen E angebrachten Identifizierungselemente geeignet ist. Insofern kann die Identifizierungsvorrichtung z. B. ein Barcodescanner sein, bevorzugt ist jedoch ein elektromagnetisch arbeitender Scanner, da dieser eine Datenerfassung unabhängig von der räumlichen Lage des jeweiligen Ersatzteils E ermöglicht. Beispielsweise kann es sich um einem elektromagnetischen RFID Scanner mit Antenne handeln.

Auf der Zeichnung sind zwei unterschiedlich arbeitende Identifizierungsvorrichtungen 21, 22 wiedergegeben.

Die Identifizierungsvorrichtung 21 ist vorzugsweise oberhalb einer Ablage 26 angeordnet und ist dafür ausgebildet, ein einzelnes Ersatzteil E datentechnisch zu erfassen. Hierzu muss das jeweilige Ersatzteil in den Erfassungsbereich der Identifizierungsvorrichtung 21 gebracht werden, oder ein daran befestigter Handscanner wird in die Nähe des Ersatzteils E gebracht. Die tischähnliche Ablage 26 erleichtert dabei die Handhabung des unter Umständen schweren oder unhandlichen Ersatzteils E.

Eine andere Identifizierungsvorrichtung 22 ist dazu ausgebildet, mehr oder weniger zugleich alle Ersatzteile E datentechnisch zu erfassen, die sich zum Erfassungszeitpunkt innerhalb der Datenerfassungszone 12 befinden. Die Identifizierungsvorrichtung 22 ist daher insbesondere als Parallel- oder Mehrfachscanner ausgebildet. Im Falle eines RFID Scanners werden dazu zwei Antennen benötigt.

Da die Identifizierungsvorrichtung 22 einen relativ großen Erfassungsbereich hat besteht die Gefahr eines ungewollten Erfassens auch von Ersatzteilen, die sich zwar in der Lagerzone 6 befinden, jedoch nahe an der Datenerfassungszone 12. Zur Vermeidung solcher Erfassungsfehler muss, bevor die Identifizierungsvorrichtung 22 mit dem Erfassen der in der Datenerfassungszone 12 befindlichen Ersatzteile beginnt, zunächst die Innentür 15 geschlossen sein. Vorzugsweise ist die Innentür 15 ebenso wie die Trennwand 13 in der Weise ausgebildet, dass sie für die Signale oder elektromagnetischen Felder der Identifizierungsvorrichtung 22 undurchdringlich ist. Bevorzugt ist die Innentür 15 eine Lochblechtür, deren Lochdurchmesser kleiner als 3 cm ist.

Zur Überprüfung des Schließ- und/oder Öffnungszustandes der Innentür 15 ist diese mit einer Überwachungssensorik versehen. Nur wenn die Überwachungssensorik ein Schließsignal der Innentür 15 generiert, erfolgt die Freigabe der Identifizierungsvorrichtung 22.

Um unbefugte Personen am Betreten des Raums 1 zu hindern, ist die Außentür 14 mit einer elektrisch betätigbaren Türsperre versehen. Im Bereich der Tür 14 sind Personenerfassungsmittel 30 angeordnet, die signaltechnisch mit dieser Türsperre verbunden sind. Von außen sich nähernde Personen werden durch das Personenerfassungsmittel 30 erfasst, woraufhin per Datenabgleich überprüft wird, ob die betreffende Person zum Betreten des Teilelagers berechtigt ist. Nur in diesem Fall wird die elektrische Türsperre aufgehoben und so das Eintreten in die Datenerfassungszone 12 freigegeben.

Alternativ kann die Außentür 14 mit einem Chipkartenleser ausgestattet sein, an welchen eine Chipkarte gehalten werden muss. Ein Vorteil einer Chipkarte gegenüber herkömmlichen Schlüsseln liegt darin, dass verlorene Chipkarten notfalls sofort per Software gelöscht werden können.

Im Zusammenhang mit dem Ent- und Verriegeln der Türsperre kann auch das Deaktivieren bzw. Aktivieren einer Alarmanlage evtl. mit Fernmeldersystem erfolgen.

Die so autorisiert in das Teilelager gelangte Person begibt sich daraufhin in die Lagerzone 6, um die jeweils gesuchten Ersatzteile E an sich zu nehmen. Das Auffinden in dem unter Umständen ausgedehnten Lagerbereich wird über eine Suchfunktion unter Einsatz der Dateneingabe- und Anzeigeeinheit 25 erleichtert.

Sind die betreffenden Ersatzteile gefunden und entnommen, begibt sich die Person wieder zurück in die Datenerfassungszone 12. Die Innentür 15 wird geschlossen, und daraufhin erfolgt, vorzugsweise automatisch, das Erfassen aller zu diesem Zeitpunkt in der Datenerfassungszone 12 angeordneten Ersatzteile. Erst wenn diese Erfassung abgeschlossen ist, dürfen die Ersatzteile nach außerhalb gebracht werden. Der entsprechende Zeitpunkt hierfür kann der Person entweder angezeigt werden, etwa durch ein akustisches Signal, oder die Außentür 14 wird mittels der elektrisch betätigbaren Türsperre solange nicht freigegeben, bis die Identifizierungsvorrichtung 21, 22 sämtliche entnommenen Ersatzteile datentechnisch sicher erfasst hat.

Parallel kann der Person mittels der Dateneingabe- und Anzeigeeinheit 25 angezeigt werden, welche Ersatzteile aktuell als entnommen erfasst wurden. Nach deren Anzeige kann die Person aufgefordert werden, dies an der Dateneingabe- und Anzeigeeinheit 25 zu quittieren und damit zu bestätigen.

Durch das Erfassen entnommener Ersatzteile mittels der Identifizierungsvorrichtung 21 bzw. 22 erfolgt eine Meldung an das in dem Teilelager oder außerhalb angeordnete Warenwirtschaftssystem über das Fehlen der betreffenden Ersatzteile. Das Warenwirtschaftssystem generiert daraufhin automatisch eine Neubestellung beim Hersteller bzw. Lieferanten der Ersatzteile, so dass bei nächster Gelegenheit bzw. nach einem vereinbarten Zeitraum die fehlenden Waren wieder neu aufgefüllt werden können.

Um der Entnahme eines nicht erfassten Ersatzteiles E aus der Datenerfassungszone 12 vorzubeugen, kann folgender Mechanismus vorgesehen sein: Die Innentür 15 zwischen der Lager- 6 und Datenerfassungszone 12 ist automatsch ent- und verriegelbar. Sobald der Container geöffnet und betreten wird, entriegelt die Innentür 15. Nach Entnahme der Ersatzteile E und Verlassen der Lagerzone 6 verriegelt die Innentür 15 automatisch entweder nach dem Schließen der Innentür 15 oder spätestens durch Starten der Erfassung entnommener Ersatzteile E. Der Vorgang bzw. das Entriegeln der Innentür 15 wiederholt sich erst wieder nach erneutem Betreten des Containers bzw. nach Öffnen der Außentür 14 von außen.

Sowohl in der Lagerzone 6 als auch in der Datenerfassungszone 12 befinden sich, vorzugsweise im Deckenbereich, Lichtquellen 36. Die Lichtquellen 36 sind sensorgesteuert schaltbar, wobei die Sensoren Personensensoren sind. Energie für elektrische Beleuchtung wird also nur benötigt, wenn sich Personen in dem Teilelager befinden. Dies gilt auch für die Stromzufuhr der Datenverarbeitung. Das Ein- und Ausschalten der Stromquelle kann zusätzlich oder alternativ auch über die Außentür 14 bzw. deren Sperrmechanismus erfolgen.

Ferner kann das Teilelager einen Notschalter zur Freigabe aller Türen 14, 15 in Gefahrensituationen, sowie eine kontinuierliche bzw. benutzungsabhängige Videoüberwachung des Inneren und/oder des Äußeren des Teilelagers aufweisen.

Über das Personenerfassungsmittel 30 kann mittels Software nachvollzogen werden, welche Personen wann das Teilelager betreten bzw. verlassen haben.

Zur Beantwortung von möglichen Fragen und/oder Problemen in der Anwendung des Teilelagers, kann eine Einrichtung zur Verbindungsaufnahme zu einer Servicestelle, wie z. B. eine Telefon- und/oder Videoverbindung vorgesehen werden. Ebenso kann eine Einrichtung zur Erfassung von Türöffnungszeiten und/oder -zeiträumen vorgesehen werden, um im Missbrauchsfall Aufklärung betreiben zu können.

Der Container ist mit einem Starkstromanschluss ausgestattet, der die Klimatisierung, das Warenwirtschaftssystem und die Beleuchtung sowie wenn vorhanden die Alarmanlage und die Kameraüberwachung mit Strom versorgt. Dies führt zu einer weitgehend autonomen Funktion des Teilelagers.

Zum Schutz aller elektronischen Funktionen vor einem Stromausfall kann eine unterbrechungsfreie Stromversorgung (USV) vorgesehen werden.

Ferner kann die Datenkommunikation über das GSM-Netz erfolgen. Dazu können außerhalb des Teilelagers Antennen vorgesehen sein. Dabei kommuniziert jeweils die Alarmanlage, die Kameraüberwachung und das Warenwirtschaftssystem über eine eigene Antenne.

### Bezugszeichenliste

- 1: Raum, Container
- 2: Boden
- 3: Dach
- 4: Längswand
- 5: Stirnwand
- 6: Lagerzone
- 7: Rad
- 8: Regal
- 10: Lagerfläche
- 12: Datenerfassungszone
- 13: Trennwand
- 14: Außentür
- 15: Innentür
- 21: Identifizierungsvorrichtung
- 22: Identifizierungsvorrichtung
- 25: Dateneingabe- und Anzeigeeinheit
- 26: Ablage
- 30: Personenerfassungsmittel
- 36: Lichtquelle

- E: Ersatzteil

## Patentansprüche

1. Teilelager für Ersatzteile von zu wartenden bzw. zu reparierenden Fahrzeugen, insbesondere Schwerlast-Anhängerfahrzeugen, mit einem Raum (1), innerhalb dessen angeordnet sind:
eine aus Regalen (8) mit übereinander und nebeneinander angeordneten Lagerflächen (10) bestehende Lagerzone (6) für Ersatzteile (E), die jeweils mit einem berührungslos erfassbaren Identifizierungselement versehen sind,
eine Datenerfassungszone (12) mit einer Außentür (14),
eine datentechnisch mit einem Warenwirtschaftssystem verknüpfte Identifizierungsvorrichtung (21, 22) zum berührungslosen Erfassen von Ersatzteilen (E) in der Datenerfassungszone (12),
wobei der Raum (1) nur über die Datenerfassungszone (12) verlassbar ist.

2. Teilelager nach Anspruch 1, **dadurch gekennzeichnet, dass** der Raum als Container (1) ausgestaltet ist.

3. Teilelager nach Anspruch 1 oder 2, **dadurch gekennzeichnet, dass** die Lagerzone (6) nur durch die Datenerfassungszone (12) hindurch betretbar ist.

4. Teilelager nach Anspruch 1, 2 oder 3, **gekennzeichnet durch** eine Innentür (15) zwischen der Datenerfassungszone (12) und der Lagerzone (6).

5. Teilelager nach einem der Ansprüche 1 bis 4, **dadurch gekennzeichnet, dass** die Identifizierungsvorrichtung (21) für das Erfassen einzelner Ersatzteile (E) ausgebildet ist.

6. Teilelager nach einem der Ansprüche 1 bis 4, **dadurch gekennzeichnet, dass** die Identifizierungsvorrichtung (22) für ein gemeinsames Erfassen aller Ersatzteile (E) ausgebildet ist, die sich innerhalb der Datenerfassungszone (12) befinden.

7. Teilelager nach Anspruch 4, **gekennzeichnet durch** eine Überwachungssensorik für den Schließ- und/oder Öffnungszustand der Innentür (15), wobei die Identifizierungsvorrichtung (22) dazu ausgebildet ist, das gemeinsame Erfassen aller innerhalb der Datenerfassungszone (12) sich befindenden Ersatzteile (E) nur bei Vorliegen eines Schließsignals der Innentür (15) durchzuführen.

8. Teilelager nach einem der vorangehenden Ansprüche, **gekennzeichnet durch** eine in der Datenerfassungszone (12) angeordneten, mit dem Warenwirtschaftssystem datentechnisch verknüpfte Dateneingabe- und Anzeigeeinheit (25).

9. Teilelager nach einem der vorangehenden Ansprüche, **dadurch gekennzeichnet, dass** die Außentür (14) mit einer elektrisch betätigbaren Türsperre versehen ist, und dass im Bereich außerhalb der Außentür (14) Personenerfassungsmittel (30) angeordnet sind, die signaltechnisch mit der Türsperre verbunden sind.

10. Teilelager nach Anspruch 9, **dadurch gekennzeichnet, dass** die Türsperre dazu ausgebildet ist, in Abhängigkeit von einem Anwesenheitssignal bzw. einem Identifizierungssignal des Personenerfassungsmittels (30) die Außentür (14) entweder zu blockieren oder für den Durchtritt freizugeben.

11. Teilelager nach einem der vorangehenden Ansprüche, **dadurch gekennzeichnet, dass** die Lagerzone (6) und/oder die Datenerfassungszone (12) mit sensorgesteuert schaltbaren Lichtquellen (36) versehen sind, wobei die Sensoren Personensensoren sind.
